Europäisches Patentamt

European Patent Office

Office européen des brevets

(19)

(11) Veröffentlichungsnummer: **0 355 318**
**A1**

(12) **EUROPÄISCHE PATENTANMELDUNG**

(21) Anmeldenummer: 89111558.6

(22) Anmeldetag: 24.06.89

(51) Int. Cl.⁴: **B23F 23/12** , //B23F9/00,
**B23Q15/14**

(30) Priorität: 16.08.88 CH 3076/88

(43) Veröffentlichungstag der Anmeldung:
**28.02.90 Patentblatt 90/09**

(84) Benannte Vertragsstaaten:
**BE CH DE ES FR GB IT LI SE**

(71) Anmelder: **Werkzeugmaschinenfabrik
Oerlikon-Bührle AG
Birchstrasse 155
CH-8050 Zürich(CH)**

(72) Erfinder: **Stadtfeld, Hermann Dr.
Altmoosstrasse 21
CH-8157 Dielsdorf(CH)**

(54) **Vorrichtung zum Einstellen von Trommeln einer Kegelradverzahnungsmaschine.**

(57) Eine Verzahnungsmaschine weist neben der Wälztrommel (17), mit der die herzustellenden Zahnräder (22) im Wälzverfahren hergestellt werden, noch Einstelltrommeln (18,19,20) auf, insbesondere eine Exzentertrommel (18), eine Orientierungstrommel (19) und eine Neigungstrommel (20). Bevor mit der Herstellung eines Zahnrades (22) begonnen wird, werden diese drei Einstelltrommeln (18,19,20) mit Hilfe der erfindungsgemässen Einstellvorrichtung in die erforderliche Stellung gedreht. Diese Vorrichtung weist einen Rechner (41) zum Steuern der Trommeleinstellung auf, sowie eine vom Rechner (41) steuerbare Arretiervorrichtung (26) zum Arretieren einer Einstelltrommel (18,19,20) am Messerkopf (21). Ferner ist eine automatische Positionsablesevorrichtung (17abc, 18abc, 19abc und 20abc) vorhanden zur Uebertragung der Trommeleinstellung auf den Rechner (41), sowie eine vom Rechner (41) steuerbare Vorrichtung zur Betätigung der Festklemmvorrichtung (23-25).

FIG. 2

EP 0 355 318 A1

## Vorrichtung zum Einstellen von Trommeln einer Kegelradverzahnungsmaschine.

Die Erfindung betrifft eine Vorrichtung zum Einstellen von Trommeln einer Kegelradverzahnungsmaschine enthaltend:
- einen Wälzstock mit einer motorisch angetriebenen Wälztrommel und Einstelltrommeln, insbesondere eine Exzentertrommel, eine Orientierungstrommel und eine Neigungstrommel;
- Vorrichtungen zum Festklemmen einer der Einstelltrommeln an ihrer benachbarten Trommel in ihrer gewünschten Stellung;
- Vorrichtungen zum Ablesen der eingestellten Stellung jeder Trommel;
- einen Messerkopf, der drehbar in den Trommeln gelagert ist;
- einen Getriebestrang zum Antrieb des Messerkopfes.

Eine Kegelradverzahnungsmaschine enthält in einem Wälzstock eine drehbar gelagerte motorisch angetriebene Wälztrommel, um Zahnräder im Abwälzverfahren herstellen zu können. In dieser Wälztrommel ist eine Exzentertrommel drehbar gelagert. In der Exzentertrommel ist eine Orientierungstrommel drehbar gelagert und schliesslich ist in der Orientierungstrommel eine Neigungstrommel drehbar gelagert. Ein Messerkopf ist drehbar in der Neigungstrommel gelagert. Die Einstelltrommeln, d.h. Exzentertrommel, Orientierungstrommel und Neigungstrommel, müssen vor der Herstellung eines Zahnrades eingestellt werden, derart dass der in diesen Trommeln drehbar gelagerte Messerkopf die gewünschte Stellung zum Schneiden eines Zahnrades einnimmt.

Diese Einstellung ist bei den bekannten Verzahnungsmaschinen nur sehr umständlich und mit verschiedenen Hilfsmitteln möglich. Da diese Einstelltrommeln (Exzentertrommel, Orientierungstrommel und Neigungstrommel) unsymmetrisch ausgebildet sind und da die beiden vorderen Trommeln ausserdem exzentrisch ausgebildet sind, befindet sich der Massenschwerpunkt jeder Trommel ausserhalb der zugehörigen Trommeldrehachse, und die Schwerkraft bewirkt, dass auf diese Einstelltrommeln ein Drehmoment wirkt.

Will man einen separaten Antrieb für jede Einstelltrommel vermeiden, so könnte man daran denken, mit Hilfe des motorisch angetriebenen Messerkopfes und mit einer Kupplung oder Verbindung der einzustellenden Trommel mit dem Messerkopf die Trommeln in die gewünschte Stellung zu drehen. Beispielsweise wäre es denkbar, den Messerkopf mit der Neigungstrommel zu verbinden, die Klemmung zwischen Neigungstrommel und Orientierungstrommel zu lösen und anschliessend den Messerkopf sehr langsam anzutreiben, bis die Neigungstrommel die gewünschte Stellung erreicht hat. Damit dieser Einstellvorgang automatisiert werden kann, müsste die Klemmung bzw. Lösung jeder Trommel automatisch z.B. mit einem Federpaket und einem hydraulischen Antrieb erfolgen und die Verbindung zwischen dem Messerkopf und der Neigungstrommel müsste mit einer elektromagnetisch betätigbaren Arretierung hergestellt werden.

Leider ist die Einstellung der Trommeln auf diese Weise nicht möglich, da die oben erwähnten Drehmomente viel zu gross sind, obwohl diese schwerkraftbedingten Drehmomente in gewissen Stellungen der Einstelltrommeln die Drehung unterstützen, in andern Stellungen aber behindern. Diese Drehmomente sind so gross, dass der Getriebestrang zum Antrieb des Messerkopfes beschädigt oder zerstört würde.

Die Aufgabe, welche mit der vorliegenden Erfindung gelöst werden soll, besteht nun in der Schaffung einer Vorrichtung, welche trotz der genannten grossen Drehmomente und ohne den Einbau zusätzlicher Antriebe in der Lage ist, die Einstelltrommeln in die gewünschte Stellung zu drehen.

Die erfindungsgemässe Vorrichtung, mit der diese Aufgabe gelöst wird, weist ausser den Merkmalen im Oberbegriff des Anspruches 1 noch die Merkmale im Kennzeichen des Anspruches 1 auf.

Diese Vorrichtung hat den Vorteil, dass sämtliche Einstelltrommeln durch eine elektronische Steuervorrichtung automatisch einstellbar sind. Es genügt, die gewünschten Einstellwerte z.B. in einer Diskette zu speichern und die Diskette in die Steuervorrichtung einzusetzen. Die Einstellung sämtlicher Trommeln erfolgt dann automatisch.

Ein Ausführungsbeispiel der erfindungsgemässen Vorrichtung zum Einstellen der Trommeln einer Kegelradverzahnungsmaschine ist im folgenden anhand der beigefügten Zeichnung ausführlich beschrieben. Es zeigt:

Fig.1 eine perspektivische Darstellung einer Kegelradverzahnungsmaschine;

Fig.2 einen Schnitt durch die Trommeln der in Fig.1 dargestellten Kegelradverzahnungsmaschine;

Fig.3 ein Diagramm mit dem Drehmoment der Trommeln in Funktion des Drehwinkels;

Fig.4 ein ähnliches Diagramm wie in Fig.3 für ein erstes Beispiel;

Fig.5 ein ähnliches Diagramm wie in Fig.3 für ein zweites Beispiel; und

Fig.6 eine schematische Darstellung der Antriebssteuerung.

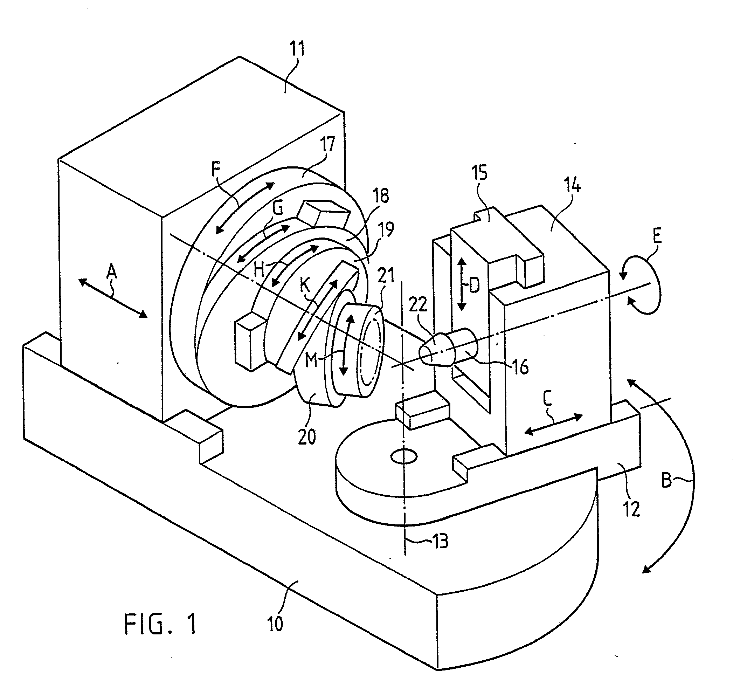

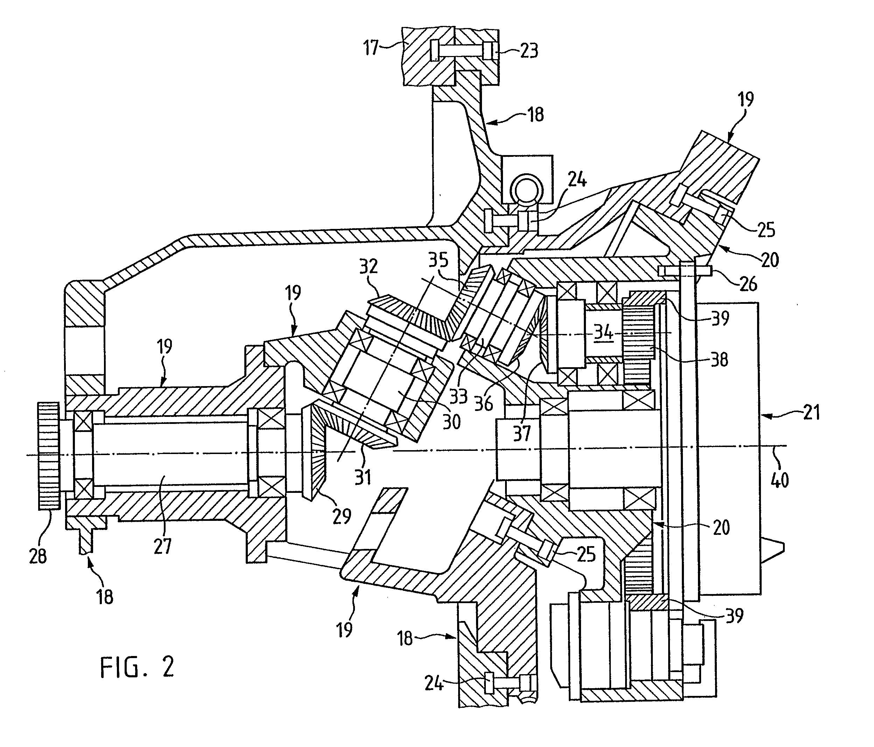

Gemäss Fig.1 ist auf einem Maschinenbett 10 einerseits ein Wälzstock 11 in Richtung des Doppelpfeiles A verschiebbar gelagert und andererseits eine Spindelstockführung 12 um eine Schwenkachse 13 in Richtung des Doppelpfeiles B verschwenkbar gelagert. Auf der Spindelstockführung 12 ist der Spindelstock 14 in Richtung des Doppelpfeiles C verschiebbar gelagert. Auf dem Spindelstock 14 ist ein Schlitten 15 vertikal in Richtung des Doppelpfeiles D verschiebbar angeordnet. Auf diesem Schlitten 15 befindet sich die Werkstückspindel 16, die in Richtung des Doppelpfeiles E drehbar ist. Auf dem Wälzstock 11 ist eine Wälztrommel 17, auf dieser eine Exzentertrommel 18, auf dieser eine Orientierungstrommel 19 und schliesslich auf dieser eine Neigungstrommel 20 in Richtung von Doppelpfeilen F, G, H und K drehbar gelagert. Ein Messerkopf 21 zum Schneiden eines Werkstückes 22 ist auf der Neigungstrommel 20 in Richtung des Doppelpfeiles M drehbar gelagert. Das Werkstück 22 ist an der Werkstückspindel 16 in üblicher Weise mit Hilfe einer automatischen Spannvorrichtung befestigt. Diese Spannvorrichtung ist hier nicht dargestellt. Im Innern des Spindelstockes 14 ist der Antrieb für die Werkstückspindel 16 und im Innern des Wälzstockes 11 ist der Antrieb für den Messerkopf 21 eingebaut. Vorzugsweise werden Messerkopf 21 und Werkstückspindel 16 über ein Zahnradgetriebe synchron zueinander angetrieben. Die Werkstückspindel 16 kann aber auch durch einen Elektromotor angetrieben werden, der über ein elektronisches Getriebe einem zweiten Elektromotor zum Antrieb des Messerkopfes 21 verbunden ist. Der Antrieb von Messerkopf 21 und Werkstückspindel 16 wird hier als bekannt vorausgesetzt und ist daher in der Zeichnung nicht dargestellt. Die Wälztrommel 17 ist ebenfalls durch einen Motor oder einen anderen geeigneten Antrieb angetrieben, da sie während der Herstellung eines Zahnrades kontinuierlich ihre Lage ändert, sofern die Zahnräder im Wälzverfahren hergestellt werden. Die übrigen drei Trommeln, d.h. die Exzentertrommel 18, die Orientierungstrommel 19 und die Neigungstrommel 20 werden zu Beginn der Herstellung eines Zahnrades 22 in die erforderliche Stellung geschwenkt und in dieser Stellung festgeklemmt. Daher ist bei den bekannten Verzahnungsmaschinen kein motorischer Antrieb für diese drei Trommeln 18,19,20 vorhanden. Zum Einstellen dieser drei Trommeln 18,19,20 wurden bisher leicht entfernbare Hilfsgetriebe verwendet, welche ein mehr oder weniger genaues Einstellen der drei Trommeln 18,19,20 erlaubten. Erfindungsgemäss soll nun die Einstellung der drei Trommeln 18,19,20 erleichtert und verbessert werden, um eine möglichst genaue Einstellung zu gewährleisten. Die erfindungsgemässe Vorrichtung zum Einstellen der drei Trommeln 18,19 und 20, d.h. der Exzentertrommel 18, der Orientierungstrommel 19 und der Neigungstrommel 20 soll nun anhand der Fig.2 erläutert werden.

Gemäss Fig.2 ist in der nur fragmentarisch angedeuteten Wälztrommel 17 die Exzentertrommel 18 drehbar gelagert. Eine erste Klemmvorrichtung 23 ermöglicht es, die Exzentertrommel 18 in jeder beliebigen Stellung in der Wälztrommel 17 festzuklemmen. Der Schwerpunkt der Exzentertrommel 18 liegt nicht in der Drehachse 40 der Wälztrommel 17. Die Schwerkraft erzeugt somit ein Drehmoment, das bestrebt ist, die Exzentertrommel 18 solange zu drehen, bis sich der Schwerpunkt der Exzentertrommel 18 unterhalb der Drehachse 40 der Wälztrommel 17 befindet.

In der Exzentertrommel 18 ist die Orientierungstrommel 19 drehbar gelagert. Eine zweite Klemmvorrichtung 24 ermöglicht es, die Orientierungstrommel 19 in jeder beliebigen Stellung in der Exzentertrommel 18 festzuklemmen. Auch hier liegt der Schwerpunkt der Orientierungstrommel 19 nicht in der Drehachse 40 der Wälztrommel 17 und die Schwerkraft erzeugt ein Drehmoment, das bestrebt ist, die Orientierungstrommel 19 solange zu drehen, bis sich der Schwerpunkt der Orientierungstrommel 19 unterhalb der Drehachse 40 der Wälztrommel 17 befindet.

In der Orientierungstrommel 19 ist die Neigungstrommel 20 drehbar gelagert. Eine dritte Klemmvorrichtung 25 ermöglicht es, die Neigungstrommel 20 in jeder beliebigen Stellung in der Orientierungstrommel 19 festzuklemmen. Auch hier liegt der Schwerpunkt der Neigungstrommel 20 nicht in der Drehachse 40 der Wälztrommel 17 und die Schwerkraft erzeugt ein Drehmoment, das bestrebt ist, die Neigungstrommel 20 solange zu drehen, bis sich der Schwerpunkt der Neigungstrommel 20 unterhalb der Drehachse 40 der Wälztrommel 17 befindet.

Dabei ist auch noch von Bedeutung, wie der Schwerpunkt der Neigungstrommel 20 zur Drehachse der Orientierungstrommel 19 liegt und wie der Schwerpunkt der Orientierungstrommel 19 zur Drehachse der Exzentertrommel 18 liegt.

Eine Arretiervorrichtung 26, z.B. ein Bolzen, ermöglicht es, den Messerkopf 21 in einer beliebigen Stellung in der Neigungstrommel 20 zu arretieren, sodass sich der Messerkopf 21 nicht mehr relativ zur Neigungstrommel 20 drehen kann.

Zum Antrieb des Messerkopfes 21 ist ein Getriebestrang vorhanden, der durch sämtliche Trommeln hindurch geht. Eine erste Welle 27, an der einerseits ein Zahnrad 28 und andererseits ein Kegelrad 29 befestigt ist, sowie eine zweite Welle 30, an der einerseits ein Kegelrad 31 und andererseits ein zweites Kegelrad 32 befestigt ist, sind in der Orientierungstrommel 19 drehbar gelagert. Eine dritte und eine vierte Welle 33 und 34, an denen einerseits die Kegelräder 35,37 und andererseits das Kegelrad 36 und das Zahnrad 38 befestigt sind, sind in der Neigungstrommel 20 drehbar gelagert. Das Zahnrad 28 am Anfang des Getriebestranges steht mit einem weiteren nicht dargestellten Getriebestrang in Eingriff. Das Kegelrad 29 der ersten Welle 27 steht mit dem Kegelrad 31 der zweiten Welle in Eingriff. Das Kegelrad 32 der zweiten Welle 30 steht mit dem Kegelrad 35 der dritten Welle 33 in Eingriff und das Kegelrad 36 der dritten Welle 33 steht mit dem Kegelrad 37 der vierten Welle 34 in Eingriff. Das Zahnrad 38 der vierten Welle 34 steht mit einem innenverzahnten Zahnkranz 39 des Messerkopfes 21 in Eingriff. Dieser Getriebestrang wird als bekannt vorausgesetzt.

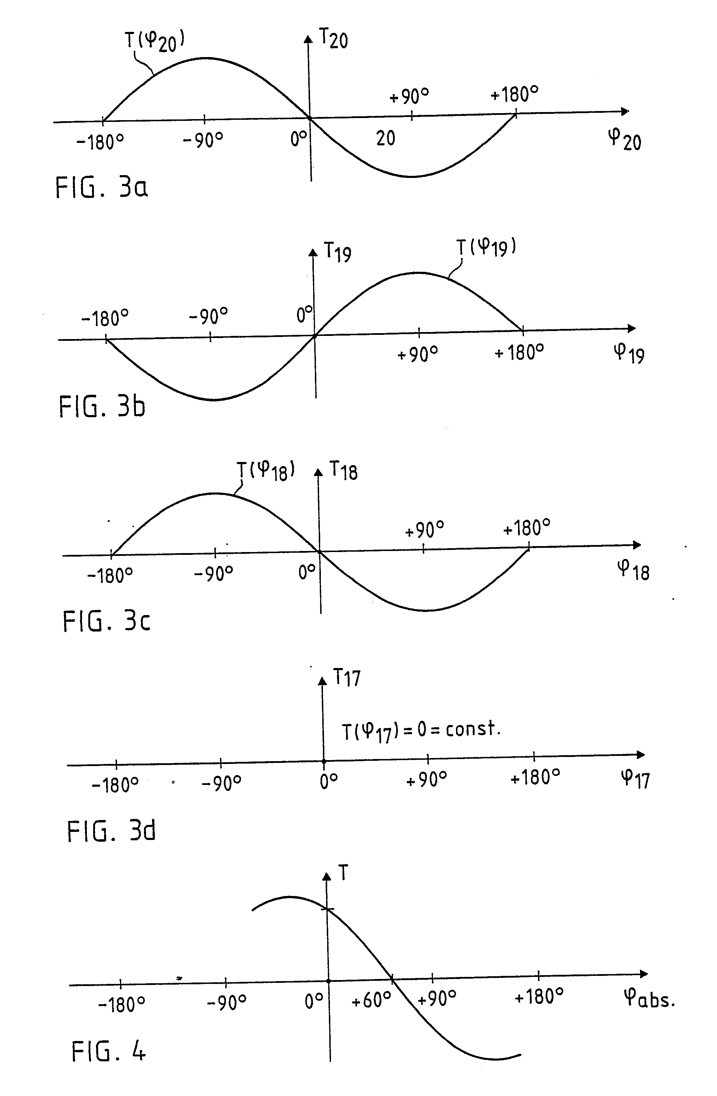

Gemäss Fig.3 ändert sich das durch die Schwerkraft an den Trommeln 18,19 und 20 bewirkte Drehmoment sinusförmig. Wenn der Schwerpunkt einer Trommel seinen höchsten oder tiefsten Punkt erreicht hat, verschwindet dieses Drehmoment, erreicht dazwischen seinen kleinsten oder grössten Wert, d.h. die Drehung der Trommel wird durch die Schwerkraft entweder unterstützt oder behindert.

Bei der Neigungstrommel 20 (Fig.3a) ist bei -180° der Schwerpunkt in seiner obersten Stellung, es ist kein Drehmoment vorhanden. Bei -90° ist das Drehmoment am grössten und fördert die Drehung, und bei 0°, wenn der Schwerpunkt sich in seiner untersten Stellung befindet, ist wiederum kein Drehmoment vorhanden. Bei +90° ist das Drehmoment am kleinsten, d.h. es ist negativ und behindert die Drehung.

Bei der Orientierungstrommel 19 (Fig.3b) sind die Verhältnisse gerade umgekehrt. Bei -180° ist der Schwerpunkt der Orientierungstrommel in seiner untersten Stellung, es ist kein Drehmoment vorhanden. Das Drehmoment wird zuerst negativ und behindert die Drehung der Trommel und bei 0°, wenn der Schwerpunkt sich in seiner obersten Lage befindet, ist wiederum kein Drehmoment vorhanden. Anschliessend wächst das Drehmoment auf seinen höchsten Wert und fördert die Drehung der Orientierungstrommel.

Bei der Exzentertrommel 18 (Fig.3c) sind die Verhältnisse gleich wie bei der Neigungstrommel. Bei -90° ist das grösste Drehmoment vorhanden, das die Drehung der Trommel fördert und bei +90° ist das kleinste Drehmoment vorhanden, das die Drehung der Trommel verhindert.

Gemäss Fig.3d wirkt auf die Wälztrommel 17 kein Drehmoment, da sich der Schwerpunkt der Wälztrommel 17 immer auf der Wälztrommelachse 40 befindet.

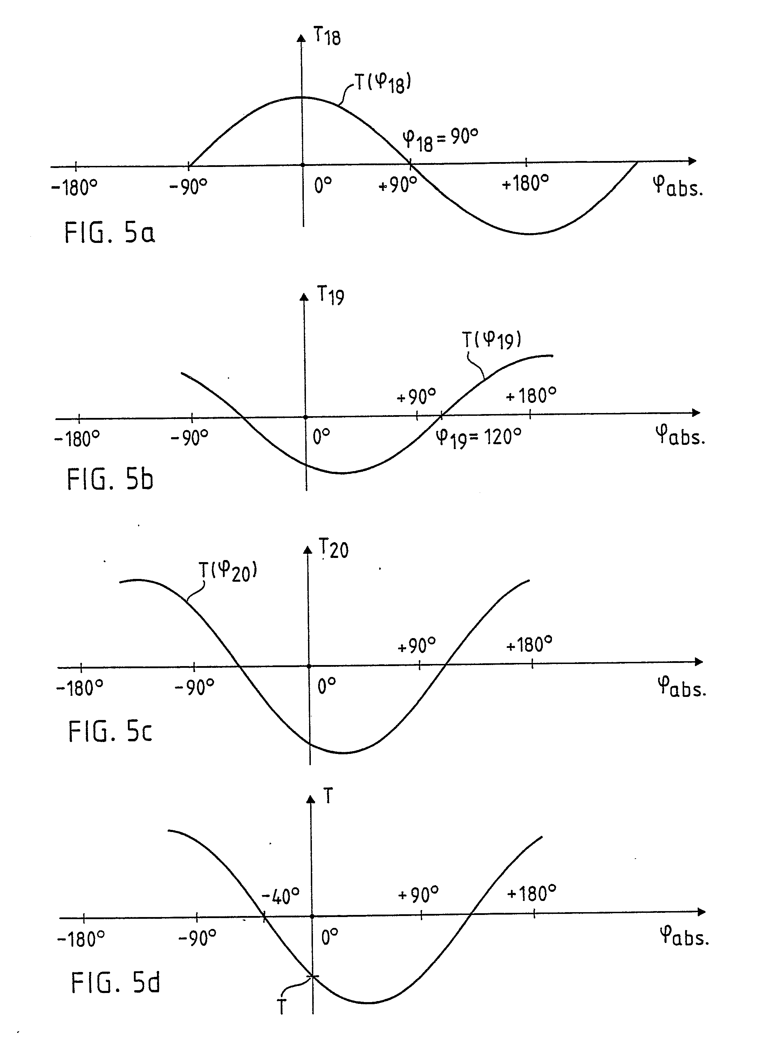

Diese Drehmomente der drei Trommeln überlagern sich, wenn die Trommeln gegenseitig festgeklemmt werden, wie aus den Figuren 4 und 5 ersichtlich ist und lassen sich dazu verwenden, die Drehung der Trommeln zu fördern, wenn diese positioniert und anschliessend fixiert werden sollen, wie weiter unten noch erläutert werden soll. Damit die Stellung jeder einzelnen Trommel genau abgelesen werden kann, ist für jede Trommel ein Positionslesesystem mit magnetischen Massstäben vorhanden.

Die Wirkungsweise der beschriebenen Vorrichtung zum Einstellen der Trommeln einer Kegelradverzahnungsmaschine ist wie folgt:

1. Es soll beispielsweise die Neigungstrommel 20 gegenüber der Orientierungstrommel 19 um 60° verschwenkt werden. Zu diesem Zweck muss zuerst die Klemmvorrichtung 25 zwischen Neigungstrommel 20 und Orientierungstrommel 19 gelöst werden. Hingegen muss die Exzentertrommel 18 an der Wälztrommel 17 mit Hilfe der Klemmvorrichtung 23 und die Orientierungstrommel 19 an der Exzentertrommel 18 mit Hilfe der Klemmvorrichtung 24 festgeklemmt werden. Schliesslich muss mit Hilfe der Arretiervorrichtung 26 die Neigungstrommel 20 am Messerkopf 21 arretiert werden und der Messerkopf 21 wird mit Hilfe des Getriebestranges 28-39 gegen Drehung gesichert. Somit lassen sich weder der Messerkopf 21 noch die Neigungstrommel 20 drehen. Mit Hilfe des Wälztrommelantriebes lassen sich die Wälztrommel 17 und die an ihr festgeklemmte Exzentertrommel 18 sowie die an dieser festgeklemmte Orientierungstrommel 19 drehen. Werden nun diese drei Trommeln 17,18 und 19 um 60° gedreht, während die Neigungstrommel 20 stehen bleibt, so ergibt sich eine relative Verdrehung der Neigungstrommel 20 gegenüber der Orientierungstrommel 19 um den gewünschten Winkel von 60°. Und die Neigungstrommel 20 kann dann mit Hilfe der Klemmvorrichtung 25 an der Orientierungstrommel 19 festgeklemmt werden.

2. In analoger Weise kann die Orientierungstrommel 19 um einen beliebigen Winkel gegenüber der Exzentertrommel 18 verschwenkt werden. Wiederum muss zuerst die Klemmvorrichtung 24 zwischen Orientierungstrommel 19 und Exzentertrommel 18 gelöst werden. Ausserdem muss die Exzentertrommel 18 mit Hilfe der Klemmvorrichtung 23 an der Wälztrommel 17 festgeklemmt werden. Ebenso muss die Orientierungstrommel 19 mit Hilfe der Klemmvorrichtung 25 an der Neigungstrommel 20 festgeklemmt werden und die Neigungstrommel 20 muss ihrerseits mit Hilfe der Arretiervorrichtung 26 am Messerkopf 21 arretiert werden. Der Messerkopf 21 wird mit Hilfe des Getriebestranges 28-29 gegen Drehung gesichert. Somit lassen sich weder der Messerkopf 21 noch die Neigungstrommel 20, noch die Orientierungstrommel 19 drehen. Mit Hilfe des Wälztrommelantriebes lassen sich die Wälztrommel 17 und die an ihr festgeklemmte Exzentertrommel 18 drehen. Werden nun diese beiden Trommeln 17 und 18 um den gewünschten Winkel von z.B. wiederum 60° gedreht, während die Neigungstrommel 20 und die daran festgeklemmte Orientierungstrommel 19 stehen bleiben, so ergibt sich die gewünschte relative Verdrehung der Orientierungstrommel 19 um den gewünschten Winkel von 60° gegenüber der Exzentertrommel 18. Die Orientierungstrommel 19 kann dann mit Hilfe der Klemmvorrichtung 24 an der Exzentertrommel 18 festgeklemmt werden.

3. In analoger Weise kann schliesslich die Exzentertrommel 18 um einen beliebigen Winkel gegenüber der Wälztrommel 17 verschwenkt werden. Zuerst muss die Klemmvorrichtung 23 zwischen Exzentertrommel 18 und Wälztrommel 17 gelöst werden. Ausserdem muss die Exzentertrommel 18 mit Hilfe der Klemmvorrichtung 24 an der Orientierungstrommel 19 und diese muss ihrerseits mit Hilfe der Klemmvorrichtung 25 an der Neigungstrommel 20 festgeklemmt werden. Die Neigungstrommel 20 muss mit Hilfe der Arretiervorrichtung 26 am Messerkopf 21 arretiert werden. Der Messerkopf 21 ist mit Hilfe des Getriebestranges 28-39 gegen Drehung gesichert. Somit sind über den Messerkopf die Trommeln 20,19 und 18 gegen Drehung gesichert. Mit Hilfe des Wälztrommelantriebes lässt sich die Wälztrommel 17 gegenüber der Exzentertrommel 18 um den gewünschten Winkel verdrehen. Die Exzentertrommel 18 kann dann mit Hilfe der Klemmvorrichtung 23 an der Wälztrommel 17 festgeklemmt werden.

Die soeben beschriebenen Drehungen der Trommeln 17 - 20 relativ zueinander können bei geeigneter Ausgangslage durch die von der Schwerkraft erzeugten Drehmomente auf diese Trommeln 18 - 20 unterstützt werden (Fig.5).

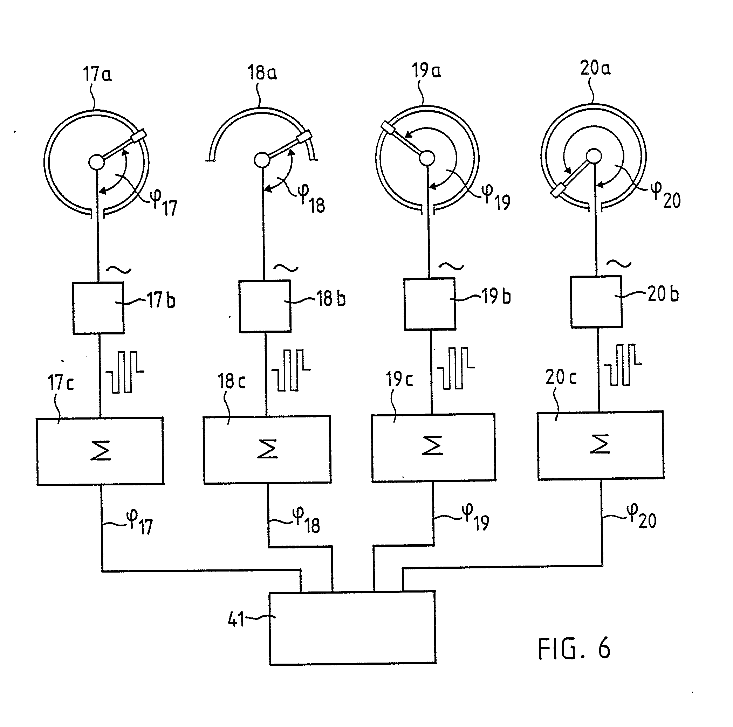

Gemäss Fig.6 wird die Stellung der vier Trommeln 17,18, 19 und 20 durch ein Lesesystem in einem Rechner 41 angezeigt. Dieses Lesesystem weist daher vier Magnetmassstäbe 17a,18a,19a und 20a auf, die sich entweder über den ganzen Umfang der Tommeln erstrecken oder nur über einen Teil des Umfanges. An jeden Magnetmassstab 17a,18a,19a und 20a ist ein Spannungswandler 17b,18b,19b und 20b angeschlossen, der aus sinusförmigen Spannungsschwankungen rechteckige Spannungsimpulse erzeugt, wie in der Zeichnung schematisch angedeutet ist. An jeden Wandler 17b,18b,19b,20b ist ein Summierungskonverter 17c,18c,19c,20c angeschlossen, mit dem die vom Wandler abgegebenen Signale summiert werden. Die Summe dieser Signale entspricht dann dem Winkel, um den die Trommel gedreht wurde. Mit Magnetmassstäben ist eine sehr genaue Positionierung der Trommeln 17,18,19 und 20 möglich. Dabei spielt nicht nur die Genauigkeit des Lesesystems eine Rolle, sondern auch die Genauigkeit des Schrittschaltantriebes, mit dem die Wälztrommel 20 angetrieben wird. Es kann z.B. jedem Impuls des Magnetmassstabes 17a,18a,19a,20a ein Schritt dieses Schrittschaltantriebes der Wälztrommel 17 entsprechen. Das Lesesystem wird hier als bekannt vorausgesetzt und daher nicht weiter erläutert.

## Ansprüche

1. Vorrichtung zum Einstellen von Trommeln (18,19,20) einer Kegelradverzahnungsmaschine, enthaltend:
- einen Wälzstock (11) mit einer motorisch angetriebenen Wälztrommel (17) und Einstelltrommeln (18-20), insbesondere eine Exzentertrommel (18), eine Orientierungstrommel (19) und eine Neigungstrommel (20);
- Vorrichtungen (23-25) zum Festklemmen einer der Einstelltrommeln (18-20) an ihrer benachbarten Trommel (18-20) in ihrer gewünschten Stellung;
- Vorrichtungen zum Ablesen der eingestellten Stellung jeder Trommel (18-20);
- einen Messerkopf (21), der drehbar in den Trommeln (17-20) gelagert ist;
- einen Getriebestrang (27-39) zum Antrieb des Messerkopfes (21);
gekennzeichnet durch
- einen Rechner zum Steuern der Trommeleinstellung;
- eine vom Rechner steuerbare Arretiervorrichtung (26) zum Arretieren einer Trommel (20) am Messerkopf (21);
- eine automatische Positionsablesevorrichtung zur Uebertragung der Trommelstellung auf den Rechner;
- eine vom Rechner steuerbare Vorrichtung zur Betätigung der Festklemmvorrichtung (23-25).

2. Vorrichtung nach Anspruch 1, dadurch gekennzeichnet, dass zum Einstellen einer der Einstelltrommeln (18-20) die motorisch angetriebene Wälztrommel (17) verwendet wird, dass zum Festhalten der übrigen Einstelltrommeln (18-20) der über den Antriebsgetriebestrang (27-39) festgehaltene Messerkopf (21) verwendet wird und dass die Festklemm- und Arretiervorrichtungen (23-26) zum Festklemmen und Arretieren der Einstelltrommeln (18-20) an der Wälztrommel (17) bzw. am Messerkopf (21) verwendet werden.

3. Vorrichtung nach Anspruch 1, dadurch gekennzeichnet, dass die durch die exzentrisch angeordneten Massenschwerpunkte der Einstelltrommeln (18-20) erzeugten Drehmomente zur Erleichterung der Einstellung verwendet werden.

FIG. 1

FIG. 2

$T(\varphi_{20})$

$T_{20}$

+90°     +180°

-180°     -90°     0°     20     $\varphi_{20}$

FIG. 3a

$T_{19}$     $T(\varphi_{19})$

-180°     -90°     0°

+90°     +180°     $\varphi_{19}$

FIG. 3b

$T(\varphi_{18})$     $T_{18}$

+90°     +180°

-180°     -90°     0°     $\varphi_{18}$

FIG. 3c

$T_{17}$

$T(\varphi_{17}) = 0 = const.$

-180°     -90°     0°     +90°     +180°     $\varphi_{17}$

FIG. 3d

$T$

-180°     -90°     0°     +60°     +90°     +180°     $\varphi_{abs.}$

FIG. 4

FIG. 5a

FIG. 5b

FIG. 5c

FIG. 5d

FIG. 6

Europäisches Patentamt

# EUROPÄISCHER RECHERCHENBERICHT

Nummer der Anmeldung

EP 89 11 1558

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | FR-A-2 273 619 (WERKZEUGMASCHINENFABRIK OERLIKON-BÜHRLE AG) * Insgesamt * --- | 1-3 | B 23 F 23/12 // B 23 F 9/00 B 23 Q 15/14 |
| A | DD-A- 257 782 (FORSCHUNGSZENTRUM DES WERKZEUGMASCHINENBAUES KARL-MARX-STADT) * Insgesamt * --- | 1 | |
| A | B.A. SHTIPELMAN: "Design and manufacture of hypoid gears", 1978, Seiten X,125, John Wiley & Sons, New York, US * Seite X, Zeilen 5-7; Seite 125, Zeile 13 * --- | 1 | |
| A | DE-A-3 643 967 (YUTAKA SEIMITSU KOGYO K.K.) * Zusammenfassung * --- | 1 | |
| A | DE-A-1 939 848 (THE GLEASON WORKS) * Seite 2; Anspruch 27 * ----- | 3 | |

| | RECHERCHIERTE SACHGEBIETE (Int. Cl.5) |
|---|---|
| | B 23 F |

Der vorliegende Recherchenbericht wurde für alle Patentansprüche erstellt

| Recherchenort | Abschlußdatum der Recherche | Prüfer |
|---|---|---|
| DEN HAAG | 03-11-1989 | MOET H.J.K. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes Dokument